# EUROPEAN PATENT SPECIFICATION

(11) **EP 1 690 489 B1**
(45) Date of publication and mention of the grant of the patent: **30.11.2011**
(21) Application number: 06101357.9
(22) Date of filing: 07.02.2006
(51) Int. Cl.: A47L 15/42, A47L 15/48

(54) **Dishwashing machine**
Geschirrspülmaschine
Lave-vaiselle

(30) Priority: 11.02.2005 IT TO20050081
(43) Date of publication of application: 16.08.2006
(73) Proprietor: BITRON S.p.A., 10122 Torino (IT)
(72) Inventor: Brignone, Enzo, 12025 Frazione Monastero Dronero(Cuneo) (IT); Da Pont, Paolo, I-10123 Torino (IT)
(74) Representative: Quinterno, Giuseppe

(56) References cited:
- WO-A1-02/088453
- GB-A- 2 311 932

## Description

The present invention relates to dishwashing machines and in particular dishwashing machines equipped with fan-type drying means for drying the dishes after a washing cycle.

More specifically the invention relates to a dishwashing machine comprising:
a washing chamber,
water supplying means able to supply to the washing chamber a quantity of water for each stage of a washing cycle,
electric heating means able to heat the water supplied to the washing chamber, in order to perform the hot washing stages,
fan-type drying means for drying the dishes after a washing cycle, comprising:
an electric fan able to cause an air flow within a circuit including the washing chamber and a duct arranged in series with this chamber and positioned in a heat exchanging relationship with a condensation container containing a liquid colder than the air drawn from the washing chamber, and
control means for activating said electric fan.

Document GB 2 311 932 A, for example, discloses such a dishwasher.

One object of the present invention is to provide a dishwashing machine of the improved type able to achieve savings in energy during operation, and in particular a reduction in the energy required to heat the water supplied to the washing chamber in order to perform the hot washing stages.

This object together with others are achieved according to the invention with a dishwashing machine of the type indicated above, characterized in that the abovementioned control means are designed to cause activation of the abovementioned electric fan during at least one hot washing stage, so as to recover thermal energy from the air contained inside the washing chamber and raise correspondingly the temperature of the liquid contained inside the condensation container.

The activation of said electric fan may take place while the water discharge pump is in operation, or while this pump is deactivated.

Conveniently, the condensation container forms part of the circuit for supplying water to the washing chamber and the condensation liquid is a quantity of water intended to be supplied to the washing chamber for a subsequent hot washing stage.

Further characteristic features and advantages of the invention will emerge from the detailed description which follows, provided purely by way of a non-limiting example, with reference to the accompanying drawing, which is a simplified schematic illustration of a dishwashing machine according to the invention.

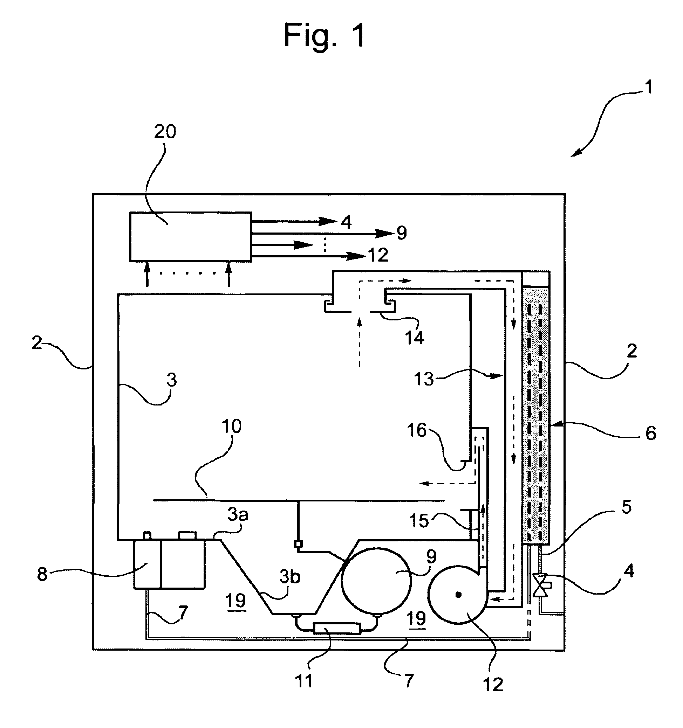

With reference to Figure 1, 1 denotes overall a dishwashing machine according to the present invention.

The dishwashing machine 1 comprises a support casing 2 inside which a washing chamber denoted overall by 3 is defined.

The bottom wall 3a of the washing chamber 3 has a shaped form and forms a lowered well 3b.

The washing chamber 3 has, associated with it, a water supplying or filling system able to supply a predetermined quantity of water for each stage of a washing cycle. This system includes an electric filling valve 4 intended to control a flow of water from the exterior, in particular from the water mains. The electric valve 4 is connected by means of a pipe 5 to the inlet of a condensation container 6, the outlet of which is connected by means of piping 7 to a decalcifying device 8 which in a manner known per se reduces the degree of hardness of the water introduced into the washing chamber 3.

In a manner not shown, but known per se, the system for filling water into the washing chamber 3 also comprises a filling pump operated by an electric motor.

The dishwashing machine 1 also comprises a washing pump 9, the intake inlet of which is connected to the bottom of the well 3b and the delivery of which is connected to (at least) one spraying impeller 10 situated inside the washing chamber. An electric heating device 11, for example of the resistor type, is activated during operation in order to heat the water supplied to the impeller 10 for performing a hot washing stage.

The dishwashing machine 1 also comprises a dish drying system of the fan type. This system comprises an electric fan 12 able to cause a flow of air within a circuit which comprises the said washing chamber 3 and a duct 13 which is arranged as regards its fluid flow in series with the chamber 3 and is positioned in a heat exchanging relationship with the condensation container 6.

In the example of embodiment shown, the duct 13 draws air from the top part of the washing chamber 3, in the region of an air intake 14, and conveys it to the inlet of the electric fan 12. The outlet or delivery of the latter is connected to the middle/lower part of the washing chamber 3 by means of a duct 15 which emerges inside said chamber in the region of an opening 16.

When the electric fan 12 is activated, it causes an air flow in the direction of the arrows shown in broken lines in the figure.

The dishwashing machine 1 comprises, finally, a control device 20 which may comprise for example a conventional electromechanical timer and/or an electronic control unit, for example of the microprocessor type. This control device is connected, among other things, to the electric valve 4, to the electric filling pump (not shown), to the washing pump 9, to the heating device 11 and to the electric fan 12.

In the dishwashing machine 1 according to the invention the control device 20 is designed to cause the activation of the electric fan 12 not only during the dish drying stages, but also during at least one hot washing stage, so as to perform the recovery of thermal energy from the air contained inside the washing chamber 3 and raise correspondingly the temperature of the liquid contained inside the condensation container 6.

The activation of the electric fan 12 during a hot washing stage may occur while the electric water discharge pump is in operation or while this electric pump is deactivated.

In the embodiment shown, the condensation container 6 forms part of the system for filling or supplying the washing chamber 3 with water and the condensation liquid which receives the heat released by the air flow caused by the electric fan 12 is a quantity of water intended to be supplied to the washing chamber 3 for a subsequent hot washing stage.

In this way savings in energy are achieved.

The electric fan 1 may be located underneath the bottom wall 3a of the washing chamber, as in the schematic illustration of Figure 1. In this case it may be designed so as to be able to draw air not only from the washing chamber 3, but also from the service compartment 19 situated underneath the bottom wall 3a, inside which compartment various devices capable of dissipating heat are contained.

In an alternative arrangement, not shown, the electric fan 12 may be located above the bottom wall 3a of the washing chamber 3.

Obviously, without modifying the principle of the invention, the embodiments and the constructional details may be greatly varied with respect to that which has been described and illustrated purely by way of a non-limiting example, without departing from the scope of the invention as defined in the accompanying claims.

## Claims

1. Dishwashing machine (1) comprising:
a washing chamber (3),
water supplying means (4-8) able to supply to the washing chamber (3) a quantity of water for each stage of a washing cycle,
electric heating means (11) able to heat the water supplied to the washing chamber (3), in order to perform the hot washing stages,
fan-type drying means (12-16) comprising:
an electric fan (12) able to cause a flow of air within a circuit including the washing chamber (3) and a duct (13) arranged in series with this chamber (3) and positioned in a heat exchanging relationship with a condensation container (6) containing a liquid colder than the air drawn from the washing chamber (3), and
means (20) for controlling activation of said electric fan (12);
**characterized in that** said control means (20) are designed to cause the activation of said electric fan (12) during at least one hot washing stage, so as to recover thermal energy from the air contained in the washing chamber (3) and raise correspondingly the temperature of the liquid contained inside the condensation container (6).

2. Dishwashing machine according to Claim 1, in which said water supplying means comprise a filling pump, activation of which is governed by said control means (20); the machine being **characterized in that** said control means (20) are designed to cause the activation of said electric fan (12) while the water filling pump is in operation.

3. Dishwashing machine according to Claim 1, in which said water supplying means comprise a discharge pump, activation of which is governed by said control means (20); the machine being **characterized in that** said control means (20) are designed to cause the activation of said electric fan (12) while the water discharge pump is deactivated.

4. Dishwashing machine according to any one of the preceding claims, in which the condensation container (6) forms part of the water supplying means (4-8) and the condensation liquid is a quantity of water intended to be supplied to the washing chamber (3) for a subsequent hot washing stage.

5. Dishwashing machine according to any one of the preceding claims, in which the electric fan (12) is located above the bottom wall (3a) of the washing chamber (3) and is able to draw air from said washing chamber (3).

6. Dishwashing machine according to any one of Claims 1 to 4, in which the electric fan (12) is located below the bottom wall (3a) of the washing chamber (3) and is able to draw air from said washing chamber (3) and from a compartment (19) located underneath said bottom wall (3a).

## Patentansprüche

1. Geschirrspülmaschine (1), die aufweist:
eine Spülkammer (3),
Wasserzufuhrmittel (4-8), die in der Lage sind, der Spülkammer (3) eine Menge an Wasser für jede Phase eines Spülzyklus zuzuführen,
elektrische Heizmittel (11), die in der Lage sind, das der Spülkammer (3) zugeführte Wasser zu erhitzen, um die Heißspülphasen auszuführen,
Trocknungsmittel (12-16) der Bauart mit Gebläse, die aufweisen:
ein elektrisches Gebläse (12), das in der Lage ist, eine Luftströmung innerhalb eines Kreislaufes zu verursachen, der die Spülkammer (3) und einen Kanal (13) enthält, der in Reihe zu dieser Kammer (3) angeordnet und in einer Wärmeaustauschbeziehung mit einem Kondensationsbehälter (6) positioniert ist, der eine Flüssigkeit enthält, die kälter ist als die der Spülkammer (3) entzogene Luft, und
Mittel (20) zur Steuerung der Aktivierung des elektrischen Gebläses (12);
**dadurch gekennzeichnet, dass** die Steuermittel (20) ausgelegt sind, um die Aktivierung des elektrischen Gebläses (12) während wenigstens einer Heißspülphase zu bewirken, um so thermische Energie aus der in der Spülkammer (3) enthaltenen Luft zurückzugewinnen und die Temperatur der im Inneren des Kondensationsbehälters (6) enthaltenen Flüssigkeit entsprechend zu erhöhen.

2. Geschirrspülmaschine nach Anspruch 1, in der die Wasserzufuhrmittel eine Füllpumpe aufweisen, deren Einschaltung durch die Steuermittel (20) gesteuert wird; wobei die Maschine **dadurch gekennzeichnet ist, dass** die Steuermittel (20) ausgelegt sind, um die Aktivierung des elektrischen Gebläses (12) zu verursachen, während die Wasserfüllpumpe im Betrieb ist.

3. Geschirrspülmaschine nach Anspruch 1, in der die Wasserzufuhrmittel eine Ablaufpumpe aufweisen, deren Einschaltung durch die Steuermittel (20) gesteuert wird; wobei die Maschine **dadurch gekennzeichnet ist, dass** die Steuermittel (20) ausgelegt sind, um die Aktivierung des elektrischen Gebläses (12) zu verursachen, während die Wasserablaufpumpe ausgeschaltet ist.

4. Geschirrspülmaschine nach einem beliebigen der vorhergehenden Ansprüche, in der der Kondensationsbehälter (6) einen Teil der Wasserzufuhrmittel (4-8) bildet und die Kondensflüssigkeit eine Wassermenge ist, die der Spülkammer (3) für eine nachfolgende Heißspülphase zugeführt werden soll.

5. Geschirrspülmaschine nach einem beliebigen der vorhergehenden Ansprüche, in der das elektrische Gebläse (12) oberhalb der Bodenwand (3a) der Spülkammer (3) angeordnet und in der Lage ist, Luft der Spülkammer (3) zu entziehen.

6. Geschirrspülmaschine nach einem beliebigen der Ansprüche 1 bis 4, in der das elektrische Gebläse (12) unterhalb der Bodenwand (3a) der Spülkammer (3) angeordnet und in der Lage ist, Luft der Spülkammer (3) und einem unter der Bodenwand (3a) befindlichen Raum (19) zu entziehen.

## Revendications

1. Machine à laver la vaisselle (1) comprenant :
une chambre de lavage (3),
des moyens d'alimentation en eau (4-8) pouvant fournir à la chambre de lavage (3) une quantité d'eau pour chaque étape d'un cycle de lavage,
des moyens de chauffage électrique (11) pouvant chauffer l'eau alimentée vers la chambre de lavage (3), afin de réaliser les étapes de lavage à chaud,
des moyens de séchage du type ventilateur (12-16) comprenant :
un ventilateur électrique (12) pouvant provoquer un écoulement d'air dans un circuit incluant la chambre de lavage (3) et un conduit (13) agencé en série avec cette chambre (3) et positionné en relation d'échange de chaleur avec un récipient de condensation (6) contenant un liquide plus froid que l'air amené depuis la chambre de lavage (3), et
des moyens (20) pour commander l'actionnement dudit ventilateur électrique (12) ;
**caractérisé en ce que** lesdits moyens de commande (20) sont conçus pour provoquer l'actionnement dudit ventilateur électrique (12) pendant au moins une étape de lavage à chaud, de façon à récupérer l'énergie thermique de l'air contenu dans la chambre de lavage (3) et augmenter de manière correspondante la température du liquide contenu à l'intérieur du récipient de condensation (6).

2. Machine à laver la vaisselle selon la revendication 1, dans laquelle lesdits moyens d'alimentation en eau comprennent une pompe de remplissage, dont l'actionnement est gouverné par lesdits moyens de commande (20) ; la machine étant **caractérisée en ce que** lesdits moyens de commande (20) sont conçus pour provoquer l'actionnement dudit ventilateur électrique (12) quand la pompe de remplissage d'eau est en fonctionnement.

3. Machine à laver la vaisselle selon la revendication 1, dans laquelle lesdits moyens d'alimentation en eau comprennent une pompe de refoulement dont l'actionnement est gouverné par lesdits moyens de commande (20) ; la machine étant **caractérisée en ce que** lesdits moyens de commande (20) sont conçus pour provoquer l'actionnement dudit ventilateur électrique (12) quand la pompe de refoulement d'eau est désactivée.

4. Machine à laver la vaisselle selon l'une quelconque des revendications précédentes, dans laquelle le récipient de condensation (6) forme partie des moyens d'alimentation en eau (4-8) et le liquide de condensation est une quantité d'eau destinée à être alimentée vers la chambre de lavage (3) pour une étape de lavage à chaud suivante.

5. Machine à laver la vaisselle selon l'une quelconque des revendications précédentes, dans laquelle le ventilateur électrique (12) est situé au-dessus de la paroi inférieure (3a) de la chambre de lavage (3) et peut amener de l'air depuis la chambre de lavage (3).

6. Machine à laver la vaisselle selon l'une quelconque des revendications 1 à 4, dans laquelle le ventilateur électrique (12) est situé sous la paroi inférieure (3a) de la chambre de lavage (3) et peut amener l'air depuis ladite chambre de lavage (3) et depuis un compartiment (19) situé sous ladite paroi inférieure (3a).
